# EUROPÄISCHE PATENTSCHRIFT

(11) **EP 0 843 486 B1**
(45) Veröffentlichungstag und Bekanntmachung des Hinweises auf die Patenterteilung: **15.04.2009**
(21) Anmeldenummer: 97111259.4
(22) Anmeldetag: 04.07.1997
(51) Int. Cl.: H04N 7/62

(54) **Verfahren zur Aktualisierung von Zeitmarken in einem digitalen Datenstrom und Remultiplexer**
Time-stamp updating method in a digital data stream and remultiplexing
Méthode de mise à jour de références de temps dans un flux de données numériques et rémultiplexage

(30) Priorität: 14.11.1996 DE 19647093
(43) Veröffentlichungstag der Anmeldung: 20.05.1998
(73) Patentinhaber: ROBERT BOSCH GMBH, 70442 Stuttgart (DE)
(72) Erfinder: Romanowski, Alexander, 31139 Hildesheim (DE); Vogt, Wilhelm, 33165 Lichtenau (DE)

(56) Entgegenhaltungen:
- EP-A- 0 712 247
- WO-A-95/26596
- US-A- 5 566 174
- US-A- 5 566 208
- ISO/IEC 13818-1: "INFORMATION TECHNOLOGY - GENERIC CODING OF MOVING PICTURES AND ASSOCIATED AUDIO INFORMATION: SYSTEMS" 15. April 1996 (1996-04-15) , INTERNATIONAL STANDARD,US,NEW YORK, NY, PAGE(S) I-XY,1-119 XP000667435 * Absatz [2.4.2.2] * * Absatz [2.4.3.5] *

## Beschreibung

### Stand der Technik

Die Erfindung geht aus von einem Verfahren zur Aktualisierung von Zeitmarken in einem digitalen Datenstrom sowie von einem nach diesem Verfahren arbeitenden Remultiplexer nach der Gattung der unabhängigen Ansprüche.

Nach der MPEG2-Spezifikation, IEC 13818-1, 1994, Seite 24 ff, ist bekannt, daß jedem nach diesem Verfahren kodierten Programmstrom ein Datenfeld "Program Clock Reference" (PCR) zugeordnet ist. Diese PCR enthält eine individuelle Zeitmarke, die für ein bestimmtes Programm spezifisch ist. Der MPEG-Datenstrom wird von der Quelle zur Senke zusammen mit den Zeitmarken übertragen. Die Zeitmarken werden auf der Empfängerseite zur Zeitrückgewinnung und zur Taktsynchronisation eingesetzt. Bei jeder Beeinflussung des Datenstroms, sei es eine Änderung der Datenrate oder eine Veränderung der Datenpaketfolge auf dem Weg von Datenquelle zur Datensenke, ist eine Aktualisierung der PCR erforderlich. In einem Datenstrom, dem Multiple Program Transport Stream (MPTS), können eine beliebige Anzahl von Programmen und damit auch eine beliebige Anzahl von ihnen zugeordneten PCR vorhanden sein.

In bisher bekannten Remultiplexern werden die PCR aktualisiert, indem für jede einzelne PCR eine Systemuhr vorhanden ist. Diese Uhren müssen über eine Phase Locked Loop (PLL) aufeinander eingestellt und nachregelbar sein. Der Aufwand für die Aktualisierung der PCR-Einheiten für jedes Programm ist groß und schränkt die Flexibilität bezüglich der Anzahl von Programmen stark ein.

Aus der WO 95/265 96 ist es für einen Datenstrom bekannt die Zeitmarken (PCR) in den Datenpaketen durch subtraktion und anschließender Addition zu aktualisieren.

### Vorteile der Erfindung

Das erfindungsgemäße Verfahren mit den kennzeichnenden Merkmalen des unabhängigen Anspruchs hat demgegenüber den Vorteil, daß alle in einem Datenstrom vorhandenen Zeitmarken mit Hilfe eines einzigen Zeittakts einer einzigen Systemuhr aktualisiert werden können. Es ist von Vorteil, daß bei diesem Verfahren keine Nachregelung einzelner Uhren mehr erforderlich ist, eine PLL-Schaltung entfällt.

Durch die in den Unteransprüchen aufgeführten Maßnahmen sind vorteilhafte Weiterbildungen und Verbesserungen des im unabhängigen Anspruch angegebenen Verfahrens zur Aktualisierung von Zeitmarken möglich.

Dabei ist es von Vorteil, daß in der Zeittaktrückgewinnung die Zeitmarke ausgelesen und die ausgelesene Zeit mit der Zeit der Systemuhr verglichen wird. Vorteilhafterweise wird die Differenz der beiden Zeiten in das Feld der zuvor ausgelesenen Zeitmarke eingestempelt.

In der weiteren Durchführung des Verfahrens wird nach dem Remultiplexen des Datenstroms in der Einstempeleinheit die in einem ersten Schritt aktualisierte Zeitmarke gelesen und mit dem um eine Verzögerungszeit d verschobene Systemuhrzeit verglichen. Das Ergebnis dieses Vergleichs enthält eine um die Verzögerungszeit d verschobene Zeit, die in die Zeitmarke eingestempelt wird.

Der erfindungsgemäße Remultiplexer mit den kennzeichnenden Merkmalen des unabhängigen Anspruchs hat den Vorteil, daß jede Zeittaktrückgewinnung und jeder Zeitstempeleinheit eine Verbindung zur einzigen Systemuhr besitzt. Dadurch entfallen aufwendige Schaltungen und Verbindungen zu einzelnen Uhren, die die Zeitmarken im Programmstrom aktualisieren.

### Zeichnung

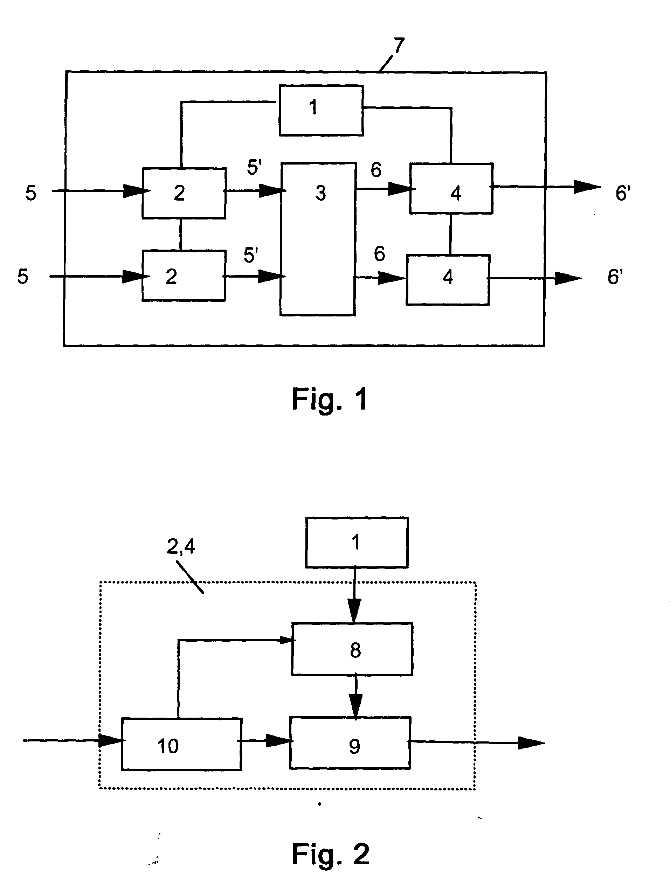

Ein Ausführungsbeispiel der Erfindung ist in der Zeichnung dargestellt und in der nachfolgenden Beschreibung näher erläutert. Es zeigen Figur 1 einen Remultiplexer und Figur 2 das Blockschaltbild einer Zeittaktrückgewinnung oder Einstempeleinheit.

### Beschreibung des Ausführungsbeispiels

In Figur 1 wird eine Remultiplexereinheit dargestellt, wie sie bei der Verwendung des MPEG2-Verfahrens notwendig wird, wenn innerhalb eines Datenstroms Veränderungen erfolgen sollen. Eine solche Veränderung kann eine Änderung in der Datenrate sein, z.B. das Beenden eines Programmteils, oder auch eine Umstellung der Programme, die der Anbieter der Programme z.B. auf einem anderen Kanal zu übertragen wünscht. Im Beispiel der Figur 1 wird der Datenstrom, der MPTS über die beiden Kanäle 5 in den Remultiplexer 7 geleitet. Dort werden sie in den Zeitmarkenrückgewinnungen 2 (Multirecovery) ausgewertet. Dazu wird zunächst überprüft, ob das gerade einlaufende Datenpaket eine PCR-Zeitmarke besitzt. Das geschieht durch Auswertung des Paketheaders, der das PCR-Flag enthält. Ist dieses Flag vorhanden, so wird die Zeitmarke ausgelesen und deren Wert mit der aktuellen Zeit der lokalen Uhr 1 verglichen. In die PCR-Zeitmarke wird in der Multirecovery-Einheit 2 ein neuer Wert, nämlich die Differenz der beiden Zeitmarken tᵤₕᵣ -t_{pcr} eingestempelt. Die Datenpakete 5' mit den Differenzzeitmarken verlassen die Multirecovery-Einheiten und werden in die Multiplexeinheit 3 eingespeist. Dort erfolgt das eigentliche Remultiplexing der Datenströme. Die Daten verlassen über den Kanal 6 die Multiplexeinheit und gelangen zur Multistampingeinheit 4. In dieser Einheit wird wieder zunächst im Datenpaketheader nach dem PCR-Flag gesucht und dann bei vorhandenen Zeitmarken die Differenz zwischen der aktuellen Uhrzeit und der lokalen Uhr (tᵤₕᵣ+d) und der übertragenen Differenzzeitmarke (tᵤₕᵣ-t_{pcr}) gebildet. Das Ergebnis ist die Zeit t_{pcr} plus die Verzögerungszeit d, die aufgewendet wurde, um das Datenpaket in der Multiplexeinheit weiterzuverarbeiten. Diese aktualisierte Zeitmarke wird anschließend wieder in das gleiche Paket eingestempelt.

Die Multistampingeinheit 4, sowie die Multirecoveryeinheit 2, sind in Figur 2 nochmals dargestellt. Das Eingangssignal, das im Fall der Multirecoveryeinheit aus dem eigentlichen Datensignal besteht wird zunächst ausgelesen (10). Wird in der Einheit 10 eine PCR-Zeitmarke entdeckt, wird sie in der Einheit 8 mit der lokalen Zeit der Uhr 1 verglichen. In der Einheit 8 wird der Wert tᵤₕᵣ -t_{pcr} errechnet. Anschließend wird in 9 der Differenzwert der Zeitmarken in das Datenpaket eingeschrieben. Das Datenpaket verläßt die Einheit 9 über den Datenausgang, der im Fall der Multirecoveryeinheit zur Multiplexeinheit 3 führt. Analog ist das Verfahren für die Multistampingeinheit 4. Hier kommt das Signal vom Multiplexer 3 und verläßt die gesamte Remultiplexeinheit als Signal 6'. Sowohl in der Multirecovery- als auch in der Multistampingeinheit werden Header analysiert, Zeitmarken ausgelesen und Differenzzeitmarken eingestempelt. Daher können Multirecovery- als auch Multistampingeinheit auf gleiche Baugruppen zugreifen, was den Aufwand für den Remultiplexer reduziert.

Für die maximale Toleranz der PCR, die durch Multiplexen des Datenstroms entstehen kann, ist in der MPEG-Spezifikation ein Wert von ± 500 ns, entsprechend 13,5 Systemtakten, festgelegt worden. Für die 27 MHz Systemuhr gilt eine Toleranz von 30 ppm (± 810 Hz). Für die lokale Uhr soll ebenfalls eine Toleranz von 30 ppm angenommen werden. Die Frequenzen der beiden Uhren können sich somit um maximal 1620 Hz unterscheiden d.h. die beiden Uhren können in ca. 8,3 ms um den erlaubten Wert von 13,5 Systemtakten auseinandertriften. Bei einer angenommenen Bitrate von 30 Mbit/s entspricht dies einer Maximalverzögerung in der Multiplexeinheit von ca. 250000 bit, d.h. 166 Transportpaketen der Länge 188 bzw. 153 Transportpaketen der Länge 204 bit. Durch die Erhöhung der Genauigkeit der lokalen Uhr kann dieser Wert verbessert werden.

## Patentansprüche

1. Verfahren zur Aktualisierung von Zeitmarken (PCR) in einem digitalen Datenstrom mit mehreren Transportströmen (MPTS), bestehend aus einer Vielzahl von Programmen mit zugeordneten Zeitmarken, in einer Remultiplexeinheit (7) mit einer Mehrzahl von Eingängen und einer Mehrzahl von Ausgängen zur Verarbeitung einer Mehrzahl von Teilen des Datenstroms, wobei alle im Datenstrom vorhandenen Zeitmarken über eine Zeitmarkenrückgewinnung ausgelesen und mithilfe des Zeittakts einer einzigen Systemuhr über eine Multistamping-Einheit aktualisiert werden, wobei die Zeitmarkenrückgewinnung für jede Zeitkmarke die in der Zeitmarke (PCR) übertragenen Zeit t_{pcr} mit der Zeit der Systemuhr tᵤₕᵣ vergleicht und die Differenz der beiden Zeiten (tᵤₕᵣ -t_{pcr}) in das Feld der zuvor ausgelesenen Zeitmarke einstempelt.

2. Verfahren zur Aktualisierung von Zeitmarken nach Anspruch 1, **dadurch gekennzeichnet, daß** nach dem Remultiplexen die Einstempeleinheit die Differenz der beiden Zeiten (tᵤₕᵣ -t_{pcr}) aus der Zeitmarke liest, vom aktuellen Stand der Systemuhr (tᵤₕᵣ + d) subtrahiert und den Wert (t_{pcr} + d) in die Zeitmarke einstempelt.

3. Remultiplexer zur Durchfürhrung aller Verfahrenschriffe des Anspruchs 1 mit zeitmarkenrückgewinnungs (2) und Zeiteinstempeleinheit (4) für den digitalen Datenstrom (MPTS) mit mehreren Transportströmen, wobei mehreren jede Zeitmarkenrückgewinnung (2) und jede Zeiteinstempeleinheit (4) eine Verbindung zur Systemuhr (1) besitzt.

4. Remultiplexer mit Zeitmarkenrückgewinnung (2) und Zeiteinstempeleinheit (4) nach Anspruch 3, **dadurch gekennzeichnet, daß** Zeitmarkenrückgewinnung (2) und Zeiteinstempeleinheit (4) zumindest in Teilen eine gemeinsame Schaltung aufweisen.

## Claims

1. Method for updating time marks (PCR) in a digital data stream with a plurality of transport streams (MPTS), comprising a multiplicity of programs with associated time marks, in a remultiplexer unit (7) having a plurality of inputs and a plurality of outputs for processing a plurality of portions of the data stream, wherein all the time marks which are present in the data stream are read by means of a time mark recovery circuit and are updated by means of a multistamping unit using the time cycle of a single system clock, wherein the time mark recovery circuit compares, for each time mark, the time t_{pcr} transmitted in the time mark (PCR) with the time on the system clock t_{clock} and stamps the difference between the two times (t_{clock} - t_{pcr}) into the field of the previously read time mark.

2. Method for updating time marks according to Claim 1, **characterized in that** the remultiplexing is followed by the stamping unit reading the difference between the two times (t_{clock} - t_{pcr}) from the time mark, subtracting it from the present reading on the system clock (t_{clock} + d) and stamping the value (t_{pcr} + d) into the time mark.

3. Remultiplexer for carrying out all the method steps of Claim 1 with a time mark recovery circuit (2) and a time stamping unit (4) for the digital data stream (MPTS) with a plurality of transport streams, wherein each time mark recovery circuit (2) and each time stamping unit (4) has a connection to the system clock (1).

4. Remultiplexer with a time mark recovery circuit (2) and a time stamping unit (4) according to Claim 3, **characterized in that** the time mark recovery circuit (2) and the time stamping unit (4) have a common circuit, at least in portions.

## Revendications

1. Méthode de mise à jour de références de temps (PCR) dans un flux de données numériques avec plusieurs flux de transport (MPTS), constituée d'une multitude de programmes avec des références de temps qui leur sont attribuées, dans une unité de multiplexage (7) avec une multitude d'entrées et une multitude de sorties pour le traitement d'une multitude de parties du flux de données, toutes les références de temps se trouvant dans le flux de données étant lues par l'intermédiaire d'une récupération des références de temps, et mises à jour à l'aide de la base de temps d'une horloge unique du système par l'intermédiaire d'une unité de multistamping, la récupération des références de temps comparant pour chaque référence de temps, le temps t_{pcr} transmis dans chaque référence de temps (PCR) avec le temps de l'horloge du système tᵤₕᵣ et marquant la différence des deux temps (tᵤₕᵣ-t_{pcr}) dans le champ de la référence de temps lue précédemment.

2. Méthode de mise à jour de références de temps selon la revendication 1, **caractérisée en ce qu'**après le remultiplexage, l'unité de marquage lit la différence des deux temps (tᵤₕᵣ-t_{pcr}) à partir de la référence de temps, la soustrait de l'état actuel de l'horloge du système (tᵤₕᵣ+ d) et marque la valeur (t_{pcr} + d) dans la référence de temps.

3. Remultiplexeur pour effectuer toutes les étapes de la méthode de la revendication 1 avec la récupération des références de temps (2) et avec l'unité de marquage du temps (4) pour le flux de données numériques (MPTS) avec plusieurs flux de transport, chaque récupération des références de temps (2) et chaque unité de marquage du temps (4) possédant une liaison vers l'horloge du système (1).

4. Remultiplexeur avec la récupération des références de temps (2) et avec l'unité de marquage du temps (4) selon la revendication 3, **caractérisé en ce que** la récupération des références de temps (2) et l'unité de marquage du temps (4) comportent au moins en partie un circuit commun.
